## Europäisches Patentamt
## European Patent Office
## Office européen des brevets

(19)

(11) Veröffentlichungsnummer: **0 227 956**
**B1**

(12)

# EUROPÄISCHE PATENTSCHRIFT

(45) Veröffentlichungstag der Patentschrift:
25.04.90

(51) Int. Cl.⁴: **H04N 7/12**

(21) Anmeldenummer: 86116489.5

(22) Anmeldetag: 27.11.86

(54) Verfahren zur Datenreduktion digitaler Bildsignale durch Vektorquantisierung.

(30) Priorität: 04.12.85 DE 3542931

(43) Veröffentlichungstag der Anmeldung:
08.07.87 Patentblatt 87/28

(45) Bekanntmachung des Hinweises auf die Patenterteilung:
25.04.90 Patentblatt 90/17

(84) Benannte Vertragsstaaten:
AT BE CH DE FR GB IT LI LU NL SE

(56) Entgegenhaltungen:
EP-A- 0 097 858
US-A- 3 984 626

IEEE TRANSACTIONS ON INFORMATION THEORY, Bd. IT 28, Nr.2, März 1982, New York. ALLEN GERSHO "On the Structure on Vector Quantizers" Seiten 157-166
IEEE COMMUNICATIONS MAGAZINE, Bd. 21, Nr.9, Dezember 1983, New York. ALLEN GERSHO et al. "Vector Quantization: A Pattern-Matching Technique for Speech Coding", Seiten 15 - 21

(73) Patentinhaber: Siemens Aktiengesellschaft,
Wittelsbacherplatz 2, D-8000 München 2(DE)

(72) Erfinder: Hammer, Bernard, Dr., Geigelsteinstrasse 24,
D-8098 Pfaffing(DE)

ACTORUM AG

## Beschreibung

Die vorliegende Erfindung betrifft ein Verfahren zur Datenreduktion digitaler Bildsignale durch Vektorquantisierung von durch orthonormale Transformation mittels einer symmetrischen, fastzyklischen Hadamard-Matrix gewonnenen Koeffizienten, wobei ein eintreffendes Bildsignal vor der Transformation in Blöcke unterteilt wird, wobei die Blöcke nach einer Peano-Kurve in Vektoren zur Gewinnung eines Eingangsvektors umsortiert werden und wobei durch die Transformation ein Mittelwertkoeffizient und eine Vielzahl von Strukturkoeffizienten gebildet werden. Die Erfindung betrifft ferner eine Vorrichtung zur Durchführung des Verfahrens

In den letzten Jahren hat sich ein starkes Interesse für das Codieren von Bildern mit einer Datenreduktion, beispielsweise zur Verwendung für Fernseh-Bewegtbilder innerhalb neuer digitaler Kommunikationsnetzwerke, beispielsweise dem IS-DN (Integrated Services Digital Network) -System entwickelt. Anwendungsbereiche dafür liegen beispielsweise auf dem Gebiete der sog. Fernkonferenzen oder der Bildtelefone bei Übertragungsraten von 2 Mbit/s bis herab zu 64 kbit/s.

Verfahren der eingangs genannten Art zur Datenreduktion digitaler Bildsignale durch Vektorquantisierung mit einer räumlichen und zeitlichen Gruppierung der Bildelemente haben sich dabei als aussichtsreich zur Lösung der bestimmten genannten Aufgaben herausgestellt. Die Vektorquantisierung erscheint an sich anderen bekannten Quellen-Codierungsverfahren überlegen, da die Theorie der Vektorquantisierung eine Datenreduktion mit optimalem Ergebnis unter der Voraussetzung gestattet, daß die Vektoren ausreichend ausgelegt sind.

Die Vektorquantisierung bezieht sich jeweils auf einen Block aufeinanderfolgender Informationsteile, z. B. eines Bildes, als ein Vektor, der als eine Einheit quantisiert wird. Im Gegensatz zu einer skalaren Quantisierung nimmt die Vektorquantisierung Rücksicht auf die statistischen Abhängigkeiten der Informationsteile voneinander.

Ein Vektorquantisierer sucht einen k-dimensionalen Vektor aus einem endlichen Satz von Ausgangsvektoren aus, der die größte Ähnlichkeit mit dem Eingangssignal aufweist. Mittels eines sog. Codebuches wird dieser Vektor mit einem binären Codewort der Länge $L = \log_2 N$ codiert, wobei N die Anzahl der Ausgangsvektoren oder die Größe des Codebuches bezeichnet. Anders als bei der skalaren Quantisierung kann die Anzahl $R = L/k$ der Bits, die benötigt werden, um eine Vektorkomponente zu codieren, ein Bruchteil von 1 sein.

Das Haupthindernis bei Verwendung der Vektorquantisierung ist deren Komplexität, die exponentiell mit R und k ansteigt, d. h. daß ein Vektorquantisierer der Größe k, welcher bei einer Rate von R bit/Komponente arbeitet, $k2^{Rk}$ Operationen zum Codieren benötigt und ebenfalls einen Codebuch-Speicherplatz der gleichen Größenordnung benötigt. Daher ist die Blockgröße k in den meisten Anwendungsfällen für die Vektorquantisierung auf 16 begrenzt. Insbesondere bei der Bildcodierung, die mit derartig kleinen Blockgrößen arbeitet, haben sich in dessen verschiedene Probleme ergeben, da die Vektorquantisierung dazu neigt, ein stark in Erscheinung tretendes Rauschen nahe den Blockgrenzen eines decodierten Bildes zu erzeugen. Diese Quantisierungsfehler bestehen hauptsächlich aus zwei Arten, nämlich dem

- Ausbilden von treppenstufenförmigen Rändern, was durch unabhängiges Codieren der Bildblöcke bewirkt wird, und dem
- plötzlichen Wechsel des Graupegels von Block zu Block, wobei sich die Graupegel des Originalbildes graduell verändern (block contouring).

Um dieses Problem zu überwinden, wird eine Vektorquantisierung mit einer sog. M-Hadamard-Transformation (MHT) verwendet. Diese Art der Transformation ist gut geeignet, die sog. Konturen-Effekte zu verhindern.

Aus Siemens Forschungs- und Entwicklungsberichte, Bd. 13 (1984) Nr. 3, Seiten 105 bis 108, und "Frequenz" 39 (1985) 7/8, Seiten 226 bis 234, gehen jeweils die Prinzipien der M-Hadamard-Transformation hervor. Die Dissertationsschrift "Transformationscodierung von digitalisierten Grautonbildern mit M-Sequenzen" von Bernard Hammer (1981) befaßt sich eingehend mit der Problematik der Transformationscodierung.

Den bekannten Transformationsverfahren der eingangs genannten Art haftet der Nachteil an, daß der Hardware-Aufwand für erforderliche Speicher relativ hoch ist, daß die Anzahl der notwendigen Suchschritte zum Auffinden des am besten geeigneten Eintrags in das Codebuch relativ groß ist und daß die Größe erforderlicher arithmetischer Einheiten in Folge einer notwendigen großen Wortbreite relativ hoch ist. Die Anzahl der Suchschritte zum Auffinden eines geeigneten Eintrags in das Codebuch steigt exponentiell mit der Anzahl der Einträge an. Durch die bei dem bekannten Verfahren notwendigen Multiplikationsschritte steigt der Verarbeitungszeitaufwand stark an, und es wird eine hochkomplexe Hardware benötigt.

Der vorliegenden Erfindung liegt die Aufgabe zugrunde, ein Verfahren und eine Vorrichtung der eingangs genannten Art anzugeben, bei denen die verschiedenen Nachteile, die dem Stand der Technik anhaften, vermieden werden. Insbesondere soll ein Verfahren/Vorrichtung geschaffen werden, für das die Notwendigkeit von Multiplikationsvorgängen entfällt und das einen verhältnismäßig kleinen Speicheraufwand und eine verhältnismäßig kurze Verarbeitungszeit benötigt.

Die der vorliegenden Erfindung zugrunde liegende Aufgabe wird durch ein Verfahren der eingangs genannten Art und gemäß dem Oberbegriff des Patentanspruchs 1 gelöst, das durch die in dem kennzeichnenden Teil des Patentanspruchs 1 angegebenen Merkmale charakterisiert ist und durch eine Vorrichtung gemäß dem Patentanspruch 5.

Vorteilhafte Weiterbildungen der Erfindung sind durch die in den Unteransprüchen angegebenen Merkmale gekennzeichnet.

Im folgenden wird die vorliegende Erfindung anhand mehrerer, Ausführungsbeispiele für die Erfindung betreffender Figuren im einzelnen erläutert.

Fig. 1 zeigt ein Blockschaltbild einer Anordnung, mittels derer das erfindungsgemäße Verfahren durchzuführen ist.

Fig. 2 zeigt ein Teilblockschaltbild, aus dem die Einzelheiten von in Fig. 1 gezeigten sog. Rekonstruktionseinheiten dargestellt sind.

Fig. 3 zeigt ein Diagramm mit einer Kurvenschar, aus dem die Zusammenhänge zwischen der sog. Spannweite und der sog. Standardabweichung von MHT-Koeffizienten hervorgeht.

Fig. 4 zeigt eine symbolische Darstellung der Ordnung einer sog. MHT-Matrix.

Fig. 5 zeigt schematisch eine sog. Peano-Kurve zum Umsortieren der Elemente eines $4 \times 4$ - Blocks in einen Vektor der Dimension 16.

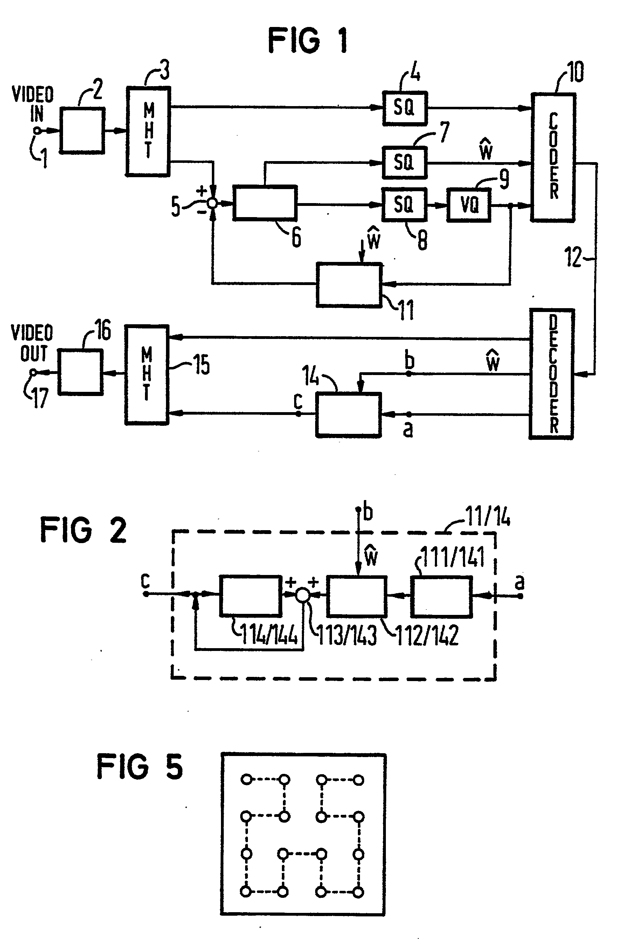

Wie bereits erläutert, zeigt Fig. 1 eine Schaltungsanordnung zur Durchführung des erfindungsgemäßen Verfahrens, wobei die gezeigte Schaltungsanordnung lediglich ein bevorzugtes Ausführungsbeispiel der Ausgestaltung einer derartigen Schaltungsanordnung darstellt.

Gemäß Fig. 1 ist eine Eingangsklemme 1 vorgesehen, über die ein zu transformierendes Video-Eingangssignal VIDEO IN eingegeben wird. Zwischen die Eingangsklemme 1 und eine sendeseitige Transformationsstufe 3 ist eine Blockbildungsstufe 2 geschaltet. Die Transformationsstufe 3 ist über einen ersten Ausgang für Mittelwertkoeffizienten mit einer ersten Quantisierungsstufe 4 zur skalaren Quantisierung von Mittelwertkoeffizienten und über einen zweiten Ausgang für Strukturkoeffizienten mit einem ersten Eingang eines Subtrahiergliedes 5 verbunden. Ein Ausgang des Subtrahiergliedes 5 ist über eine Normalisierungsstufe 6 mit einer zweiten Quantisierungsstufe 7 zur skalaren Quantisierung eines Spannweitenkoeffizienten und einer dritten Quantisierungsstufe 8 zur skalaren Quantisierung von Strukturkoeffizienten verbunden. Die erste Quantisierungsstufe 4 und die zweite Quantisierungsstufe 7 sind direkt und die dritte Quantisierungsstufe 8 über einen Vektorquantisierer 9 mit einem Coder 10 verbunden. Der Ausgang der zweiten Quantisierungsstufe 7 und der Ausgang des Vektorquantisierers 9 sind jeweils mit einem Eingang einer sendeseitigen Rekonstruktionsstufe 11 verbunden, deren Ausgang mit einem zweiten Eingang des Subtrahiergliedes 5 verbunden ist. Der Ausgang des Coders 10 ist über einen Übertragungskanal 12 mit einem empfangsseitigen Decoder 13 verbunden, von dem ein erster Ausgang für Mittelwertkoeffizienten mit einem ersten Eingang einer empfangsseitigen Transformationsstufe 15, ein zweiter Eingang für Spannweitenkoeffizienten mit einem ersten Eingang einer empfangsseitigen Rekonstruktionsstufe 14 und ein dritter Ausgang für Fehlerkoeffizienten mit einem zweiten Eingang der Rekonstruktionsstufe 14 verbunden sind, wobei ein Ausgang der Rekonstruktionsstufe 14 mit einem zweiten Eingang der empfangsseitigen Transformationsstufe 15 verbunden ist. Ein Ausgang der Transformationsstufe 15 ist über eine Rekombinationsstufe 16 mit einer Ausgangsklemme 17 verbunden, über die ein wiedergewonnenes Videoausgangssignal VIDEO OUT ausgegeben wird.

Erfindungsgemäß sieht das Verfahren zur Datenreduktion digitaler Bildsignale durch Vektorquantisierung im einzelnen vor, daß die Strukturkoeffizienten näherungsweise eine Reihenentwicklung des Wechselanteils des Eingangsvektors nach Pseudo-Zufallsfunktionen darstellen. Der Mittelwertkoeffizient w jedes der Eingangsvektoren wird skalar in der betreffenden Quantisierungsstufe quantisiert. Die Strukturkoeffizienten jedes der Eingangsvektoren werden jeweils dem Subtraktionsglied 5 zugeführt, in dem die Differenz zwischen den Strukturkoeffizienten des augenblicklichen Eingangsvektors und den rekonstruierten, quantisierten Strukturkoeffizienten des korrespondierenden Eingangsvektors des vorzugsweise zeitlich unmittelbar vorhergehenden Bildes gebildet wird. Diese Differenz wird dem Normalisierungsglied 6 zugeführt, in dem die Differenz durch einen Wert für die Spannweite der Verteilung der Koeffizienten-Amplituden dividiert wird. Jeder durch diese Division entstandene normalisierte Strukturkoeffizient wird jeweils einer gleichförmigen, skalaren Quantisierung unterzogen. Der Wert für die Spannweite wird ebenfalls einer skalaren Quantisierung unterzogen, nämlich in der zweiten Quantisierungsstufe 7. Der Vektor der quantisierten Differenz der Strukturkoeffizienten wird einer Vektorquantisierung mittels des Vektorquantisierers 9 unterzogen, bei der für den Eingangsvektor aus einem Codebuch ein Vektor als Eintrag in diesem Codebuch gesucht wird, der den Eingangsvektor mit dem minimalen mittleren quadratischen Fehler repräsentiert. Der skalar quantisierte Mittelwertkoeffizient, der skalar quantisierte Wert für die Spannweite und der Index desjenigen Codebucheintrags, der die vektorquantisierte Differenz der Strukturkoeffizienten mit dem minimalen mittleren quadratischen Fehler repräsentiert, werden gemeinsam zu einem datenreduzierten Ausgangssignal in dem Coder 10 codiert, welches Ausgangssignal gespeichert und/oder übertragen und nach dem Übertragen zur Gewinnung eines dem ursprünglichen Bildsignal ähnlichen Bildsignals in dem Decoder 13 decodiert wird, wonach ein Wert für die Spannweite w und der Index in der Rekonstruktionsstufe 14 zu einem dem korrespondierenden ursprünglichen quantisierten Strukturvektor entsprechenden rekonstruierten Strukturvektor verarbeitet werden. Ein durch die Decodierung gewonnener Mittelwertkoeffizient und der rekonstruierte Strukturvektor werden gemeinsam einer zu der eingangsseitigen Transformation inversen Rücktransformation unterzogen. Die durch die Rücktransformation, welche durch die empfangsseitige Transformationsstufe 15 ausgeführt wird, entstehenden Ausgangsvektoren werden invers nach einer eingangsseitig benutzten Peano-Kurve in Blöcke umsortiert, und die daraus aufeinanderfolgend entstehenden Blöcke werden zu dem ähnlichen Bildsignal zusammengesetzt, welches anschließend über die Ausgangsklemme 17 ausgegeben wird.

Fig. 2 zeigt, wie bereits erläutert, ein Teilblockschaltbild mit den Einzelheiten der Rekonstruktionseinheit 14, nämlich einem Codebuch 141, einer inversen Normalisierungsstufe 142, einem Addierer 143 und einem Bildspeicher 144, welche einzelnen Einrichtungen in der in Fig. 2 gezeigten Weise zusammengeschaltet sind. Die Anschlußklemmen a, b, c der Rekonstruktionseinheiten 11 bzw. 14 gemäß Fig. 2 entsprechen dabei den in Fig. 1 gezeigten Anschlußklemmen a/a, b/b, c/c.

Erfindungsgemäß ist desweiteren vorgesehen, daß zur Auswahl desjenigen Vektors in dem Codebuch (Codebuchvektor), der den Eingangsvektor mit dem kleinsten mittleren quadratischen Fehler repräsentieren soll, derjenige Codebuchvektor gesucht wird, bei dem die Spannweite der Elemente des Differenzvektors von dem Eingangsvektor und Codebuchvektor minimal ist.

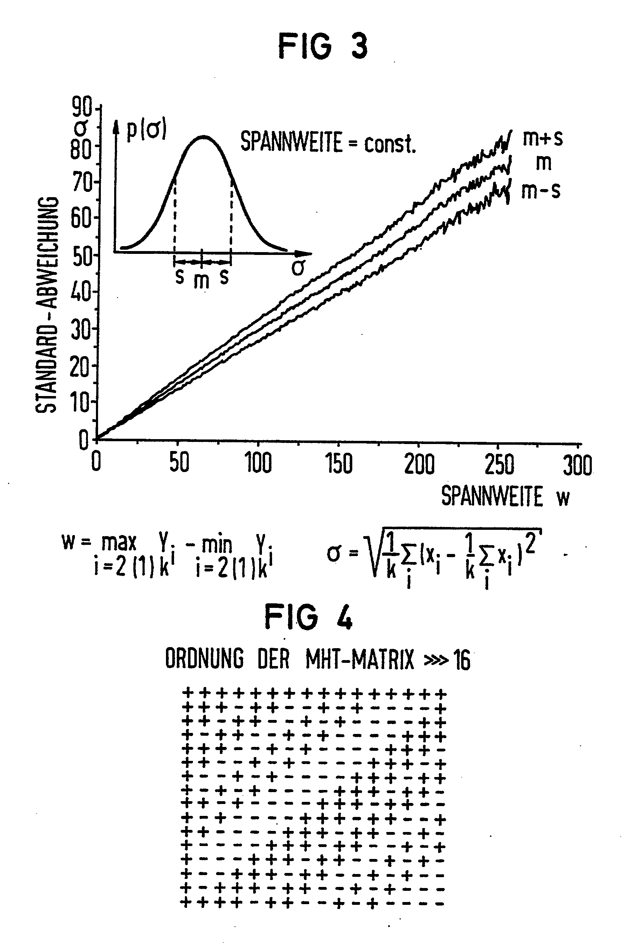

Fig. 3 zeigt, wie bereits erläutert, ein Diagramm mit einer Kurvenschar, aus dem die Beziehungen zwischen der Spannweite w und der sog. Standardabweichung von MHT-Koeffizienten ersichtlich werden.

Erfindungsgemäß ist desweiteren vorgesehen, daß die Elemente der repräsentierenden Codebuchvektoren skalar quantisierte, normalisierte Differenzen von Strukturkoeffizienten sind, so daß eine gezielte Verrauschung des ähnlichen Bildsignals derart erfolgt, daß die Rauschamplitude den Sichtbarkeitsschwellen des menschlichen visuellen Systems unter Betrachtungsbedingungen gemäß der CCIR-Empfehlung 500-1 angepaßt ist.

Vorteilhafterweise ist gemäß einer Weiterbildung der Erfindung vorgesehen, daß die am Eingang der Schaltungsanordnung gebildeten Blöcke aus 4 × 4 Bildpunkten gebildet sind und daß die Informationsdarstellung der Differenzen der Strukturkoeffizienten eines Blocks auf 3 bit/Koeffizient reduziert ist. Selbstverständlich sind auch andere Blockbildungen aus Bildpunkten, beispielsweise 2 × 6 und dergl., möglich. Die Blöcke aus 4 × 4 Bildpunkten erscheinen jedoch optimal.

Fig. 4 bzw. Fig. 5 zeigen, wie eingangs erläutert, eine Ordnung der MHT-Matrix bzw. eine Peano-Kurve, wie sie aus der ebenfalls eingangs angegebenen Literatur vom Prinzip her bekannt sind.

**Patentansprüche**

1. Verfahren zur Datenreduktion digitaler Bildsignale durch Vektorquantisierung von durch eine orthonormale Transformation mittels einer symmetrischen, fastzyklischen Hadamard-Matrix gewonnenen Koeffizienten, wobei ein eintreffendes Bildsignal vor der Transformation in Blöcke unterteilt wird, wobei die Blöcke nach einer Peano-Kurve in Vektoren zur Gewinnung eines Eingangsvektors umsortiert werden und wobei durch die Transformation ein Mittelwertkoeffizient und eine Vielzahl von Strukturkoeffizienten gebildet werden, dadurch gekennzeichnet,
- daß die Strukturkoeffizienten näherungsweise eine Reihenentwicklung des Wechselanteils des Eingangsvektors nach Pseudo-Zufallsfunktionen darstellen,
- daß jeweils der Mittelwertkoeffizient jedes der Eingangsvektoren skalar quantisiert wird,
- daß die Strukturkoeffizienten jedes der Eingangsvektoren jeweils einem Subtraktionsglied zugeführt werden, in dem die Differenz zwischen den Strukturkoeffizienten des augenblicklichen Eingangsvektors und den rekonstruierten, quantisierten Strukturkoeffizienten des korrespondierenden Eingangsvektors des vorzugsweise zeitlich unmittelbar vorhergehenden Bildes gebildet wird,
- daß diese Differenz einem Normalisierungsglied zugeführt wird, in dem die Differenz durch einen Wert für die Spannweite der Verteilung der Koeffizientenamplituden dividiert wird,
- daß jeweils jeder durch diese Division entstandene normalisierte Strukturkoeffizient einer gleichförmigen, skalaren Quantisierung unterzogen wird,
- daß der Wert für die Spannweite ebenfalls einer skalaren Quantisierung unterzogen wird,
- daß der Vektor der quantisierten Differenz der Strukturkoeffizienten einer Vektorquantisierung unterzogen wird, bei der für den Eingangsvektor aus einem Codebuch ein Vektor als Eintrag in diesem Codebuch gesucht wird, der den Eingangsvektor mit dem minimalen mittleren quadratischen Fehler repräsentiert,
- daß der skalar quantisierte Mittelwertkoeffizient, der skalar quantisierte Wert für die Spannweite und der Index desjenigen Codebucheintrages, der die vektorquantisierte Differenz der Strukturkoeffizienten mit dem minimalen mittleren quadratischen Fehler repräsentiert, gemeinsam zu einem datenreduzierten Ausgangssignal codiert werden, welches Ausgangssignal gespeichert und/oder übertragen und nach dem Übertragen zur Gewinnung eines dem ursprünglichen Bildsignal ähnlichen Bildsignals decodiert wird, wonach ein Wert für die Spannweite und der Index in einer Rekonstruktionsstufe zu einem dem korrespondierenden ursprünglichen quantisierten Strukturvektor entsprechenden rekonstruierten Strukturvektor verarbeitet werden,
- daß ein durch die Decodierung gewonnener Mittelwertkoeffizient und der rekonstruierte Strukturvektor gemeinsam einer zu der eingangsseitigen Transformation inversen Rücktransformation unterzogen werden,
- daß die durch die Rücktransformation entstehenden Ausgangsvektoren invers nach der eingangsseitig benutzten Peano-Kurve in Blöcke umsortiert werden und
- daß die daraus aufeinanderfolgend entstehenden Blöcke zu dem ähnlichen Bildsignal zusammengesetzt werden.

2. Verfahren nach Anspruch 1, dadurch gekennzeichnet, daß zur Auswahl desjenigen Vektors in dem Codebuch (Codebuchvektor), der den Eingangsvektor mit dem kleinsten mittleren quadratischen Fehler repräsentieren soll, derjenige Codebuchvektor gesucht wird, bei dem die Spannweite der Elemente des Differenzvektors von Eingangsvektor und Codebuchvektor minimal ist.

3. Verfahren nach Anspruch 1, dadurch gekennzeichnet, daß die Elemente der repräsentierenden Codebuchvektoren skalar quantisierte, normalisierte Differenzen von Strukturkoeffizienten sind, so daß eine gezielte Verrauschung des ähnlichen Bildsignals derart erfolgt, daß die Rauschamplitude den Sichtbarkeitsschwellen des menschlichen visuellen Systems unter Betrachtungsbedingungen gemäß der CCIR-Empfehlung 500-1 angepaßt ist.

4. Verfahren nach Anspruch 1, dadurch gekennzeichnet, daß die Blöcke aus 4 × 4 Bildpunkten gebildet sind und daß die Informationsdarstellung der Differenzen der Strukturkoeffizienten eines Blocks auf 3 bit/ Koeffizient reduziert ist.

5. Schaltungsanordnung zur Durchführung des Verfahrens nach einem der vorhergehenden Ansprüche, dadurch gekennzeichnet,
- daß eine Eingangsklemme (1) vorgesehen ist, über die ein zu transformierendes Video-Eingangssignal (VIDEO IN) eingegeben wird,
- daß zwischen die Eingangsklemme (1) und eine sendeseitige Transformationsstufe (3) eine Blockbildungsstufe (2) geschaltet ist,
- daß die Transformationsstufe (3) über einen ersten Ausgang für Mittelwertkoeffizienten mit einer ersten Quantisierungsstufe (4) zur skalaren Quantisierung von Mittelwertkoeffizienten und über einen zweiten Ausgang für Strukturkoeffizienten mit einem ersten Eingang eines Subtrahiergliedes (5) verbunden ist,
- daß ein Ausgang des Subtrahiergliedes (5) über eine Normalisierungsstufe (6) mit einer zweiten Quantisierungsstufe (7) zur skalaren Quantisierung eines Spannweitenkoeffizienten und einer dritten Quantisierungsstufe (8) zur skalaren Quantisierung von Stukturkoeffizienten verbunden ist,
- daß die erste Quantisierungsstufe (4), die zweite Quantisierungsstufe (7) direkt und die dritte Quantisierungsstufe (8) über einen Vektorquantisierer (9) mit einem Coder (10) verbunden sind,
- daß der Ausgang der zweiten Quantisierungsstufe (7) und der Ausgang des Vektorquantisierers (9) jeweils mit einem Eingang einer sendeseitigen Rekonstruktionsstufe (11) verbunden sind, deren Ausgang mit einem zweiten Eingang des Subtrahiergliedes (5) verbunden ist,
- daß der Ausgang des Coders (10) über einen Übertragungskanal (12) mit einem empfangsseitigen Decoder (13) verbunden ist, von dem ein erster Ausgang für Mittelwertkoeffizienten über einen ersten Eingang einer empfangsseitigen Transformationsstufe (15), ein zweiter Ausgang für Spannweitenkoeffizienten mit einem ersten Eingang einer empfangsseitigen Rekonstruktionsstufe (14) und ein dritter Ausgang für Fehlerkoeffizienten mit einem zweiten Eingang der Rekonstruktionsstufe (14) verbunden sind, wobei ein Ausgang der Rekonstruktionsstufe (14) mit einem zweiten Eingang der empfangsseitigen Transformationsstufe (15) verbunden ist, und
- daß ein Ausgang der Transformationsstufe (15) über eine Rekombinationsstufe (16) mit einer Ausgangsklemme (17) verbunden ist, über die ein wiedergewonnenes Video-Ausgangssignal (VIDEO OUT) ausgegeben wird.

**Claims**

1. Method for data reduction of digital picture signals by means of vector quantization of coefficients obtained by an orthonormal transformation by means of a symmetrical, almost cyclic Hadamard matrix, an incoming picture signal being divided up into blocks before the transformation, the blocks being sorted according to a Peano curve into vectors for the purpose of obtaining an input vector and a mean value coefficient and a multiplicity of structure coefficients being formed by the transformation, characterized
- in that the structure coefficients represent approximately a development into a series of the alternating portion of the input vector according to pseudo-random functions,
- in that scalar quantization is performed in each case on the mean value coefficient of each of the input vectors,
- in that the structure coefficients of each of the input vectors are in each case fed to a subtractor, in which the difference between the structure coefficients of the momentary input vector and the reconstructed, quantized structure coeffcents of the corresponding input vector of the preferably chronologically immediately preceding picture is formed,
- in that this difference is fed to a normalizing member, in which the difference is divided by a value for the range of distribution of the coefficient amplitudes,
- in that, in each case, each normalized structure coefficient arising from this division is subjected to a uniform, scalar quantization,
- in that the value for the range is likewise subjected to a scalar quantization,
- in that the vector of the quantized difference of the structure coefficients is subjected to a vector quantization, in which, for the input vector from a code book, the code book is searched for a vector as entry which represents the input vector with the minimum mean quadratic error,
- in that the scalar-quantized mean value coefficient, the scalar-quantized value for the range and the index of that code book entry which represents the vector-quantized difference of the structure coefficients with the minimum mean quadratic error are encoded together to form a data-reduced output signal, which output signal is stored and/or transmitted and decoded after transmitting for the purpose of obtaining a picture signal which is similar to the original picture signal, after which a value for the range and the index are processed in a reconstruction stage to form a reconstructed structure vector corresponding to the relevant original quantized structure vector,
- in that a mean value coefficient obtained by the decoding and the reconstructed structure vector are together subjected to an inverse transformation which is inverse in respect of the input-side transformation,
- in that the output vectors arising from the inverse transformation are sorted into blocks inversely according to the Peano curve used on the input-side and
- in that the successive blocks arising from this are collected together to form a similar picture signal.

2. Method according to claim 1, characterized in that, for the selection of that vector in the code book (code book vector) which is to represent the input vector with the smallest mean quadratic error, that code book vector is looked for, in which the range of the elements of the differential vector is at a minimum with respect to the input vector and the code book vector.

3. Method according to claim 1, characterized in that the elements of the representative code book vectors are scalar-quantized, normalized differences of structure coefficients so that a concerted subjection to noise of the similar picture signal occurs in such a way that the noise amplitude is matched to the visibility thresholds of the human visual system under the conditions taken into consideration in the CCIR recommendation 500–1.

4. Method according to claim 1, characterized in that the blocks are formed from 4 × 4 picture elements and in that the information representation of the differences of the structure coefficients of a block is reduced to 3 bits/coefficient.

5. Circuit arrangement for performing the method according to one of the preceding claims, characterized

– in that an input terminal (1) is provided, through which a video input signal (VIDEO IN) to be transformed is entered,

– in that, between the input terminal (1) and a transmit-side transformation stage (3), a block-forming stage (2) is connected,

– in that the transformation stage (3) is connected via a first output for mean value coefficients to a first quantization stage·(4) for the scalar quantization of mean value coefficients and via a second output for structure coefficients to a first input of a subtractor (5),

– in that an output of the subtractor (5) is connected ·via a normalizing stage (6) to a second quantization stage (7) for the scalar quantization of a range coefficient and to a third quantization stage (8) for the scalar quantization of structure coefficients,

– in that the first quantization stage (4) and the second quantization stage (7) are connected directly, and the third quantization stage (8) is connected via a vector quantizer (9), to a coder (10),

– in that the output of the second quantization stage (7) and the output·of the vector quantizer (9) are connected in each case to an input of a transmit-side reconstruction stage (11), the output of which is connected to a second input of the subtractor (5),

– in that the output of the coder (10) is connected via a transmission channel (12) to a receive-side decoder (13) of which a first output for mean value coefficients is connected via a first input of a receive-side transformation stage (15), a second output for range coefficients is connected to a first input of a receive-side reconstruction stage (14) and a third output for error coefficients is connected to a second input of the reconstruction stage (14), an output of the reconstruction stage (14) being connected to a second input of the receive-side transformation stage (15), and

– in that an output of the transformation stage (15) is connected via a recombination stage (16) to an output terminal (17), via which a recovered video output signal (VIDEO OUT) is output.

**Revendications**

1. Procédé pour réduire les données de signaux d'images numériques au moyen d'une quantification vectorielle de coefficients obtenus au moyen d'une transformation orthonormée réalisée à l'aide d'une matrice Hadamard symétrique presque cyclique et selon lequel un signal d'image arrivant est subdivisé en blocs, avant la transformation, les blocs sont triés en fonction d'une courbe de Peano en étant convertis en vecteurs permettant d'obtenir un vecteur d'entrée, et un coefficient de valeur moyenne et une multiplicité de coefficients de structure sont formés au moyen de la transformation, caractérisé par le fait

– que les coefficients de structure représentent approximativement un développement en série de la partie alternative du vecteur d'entrée, avec des fonctions pseudo-aléatoires,

– que respectivement le coefficient de valeur moyenne de chacun des vecteurs d'entrée est quantifié au moyen d'une quantification scalaire,

– que les coefficients de structure de chacun des vecteurs d'entrée sont envoyés respectivement à un circuit soustracteur, dans lequel est formée la différence entre le coefficient de structure du vecteur d'entrée instantané et le coefficient de structure reconstitué et quantifié du vecteur d'entrée correspondant de l'image qui, de préférence, est l'image immédiatement précédente dans le temps,

– que cette différence est envoyée à un circuit de normalisation, dans lequel la différence est divisée par une valeur de l'étendue de la distribution des amplitudes des coefficients,

– que respectivement chaque coefficient de structure normalisé, fourni par cette division, est soumis à une quantification scalaire uniforme,

– que la valeur de l'étendue est également soumise à une quantitication scalaire,

– que le vecteur de la différence quantifiée des coefficients de structure est soumis à une quantification vectorielle, lors de laquelle, pour le vecteur d'entrée, on recherche à partir d'un livre de codes, un vecteur qui représente le vecteur d'entrée présentant l'erreur quadratique moyenne minimale,

– que le coefficient de valeur moyenne quantifiée au moyen de la quantification scalaire, la valeur, quantifiée au moyen de la quantification scalaire, de l'étendue de la distribution et l'index de l'entrée dans le livre de code, qui représente la différence des coefficients de structure, quantifiée au moyen de la quantification vectorielle et présentant une erreur quadratique moyenne minimale, sont codés en commun pour former un signal de sortie, dont les données sont réduites et qui est mémorisé et/ou transmis, après la transmission, et décodé de manière à fournir un signal d'image semblable au signal d'image d'origine, à la suite de quoi une valeur pour l'étendue de la distribution et l'index sont traités dans un étage de reconstitution pour fournir un vecteur de structure reconstitué, qui correspond au vecteur de structure initial quantifié correspondant,

– qu'un coefficient de valeur moyenne, fourni par le décodage, et le vecteur de structure reconstitué sont soumis en commun à une transformation inverse de la transformation réalisée sur le côté entrée,

– que les vecteurs de sortie fournis par la transformation inverse sont triés en étant convertis en blocs, d'une manière correspondant à l'inverse de la courbe de Peano utilisée sur le côté entrée, et

– que les blocs ainsi obtenus successivement sont réunis pour former le signal d'image semblable.

2. Procédé suivant la revendication 1, caractérisé par le fait que pour la sélection du vecteur situé dans le livre de code (vecteur du livre de code), qui doit représenter le vecteur d'entrée présentant l'erreur quadratique moyenne la plus petite, on recherche le vecteur du livre de code, pour lequel l'étendue des éléments du vecteur constituant la différence entre le vecteur d'entrée et le vecteur du livre de code, est minimale.

3. Procédé suivant la revendication 1, caractérisé par le fait que les éléments des vecteurs représentatifs du livre de code sont des différences normalisées, quantifiées selon une quantification scalaire, de coefficients de structure, de sorte qu'on obtient l'application désirée d'un bruit au signal d'image analogue grâce au fait que l'amplitude de bruit est adaptée aux seuils de visibilité du système visuel humain, dans des conditions d'observation correspondant à la recommandation CCIR 500–1.

4. Procédé suivant la revendication 1, caractérisé par le fait que les blocs sont formés de 4 × 4 points d'image et que la représentation des informations des différences des coefficients de structure d'un bloc est réduite à 3 bits/ coefficient.

5. Montage pour la mise en oeuvre du procédé suivant l'une des revendications précédentes, caractérisé par le fait

– qu'il est prévu une borne d'entrée (1), au moyen de laquelle est introduit un signal d'entrée vidéo (VIDEO IN) devant être transformé,

– qu'un étage (2) de formation de blocs est branché entre la borne d'entrée (1) et un étage de transformation (3) situé sur le côté émission,

– que l'étage de transformation (3) est relié par l'intermédiaire d'une première sortie pour des coefficients de valeur moyenne à un premier étage de quantification (4) servant à réaliser la quantification scalaire de coefficients de valeur moyenne, et par l'intermédiaire d'une seconde sortie des coefficients de structure, à une première entrée d'un circuit soustracteur (5),

– qu'une sortie du circuit soustracteur (5) est reliée par l'intermédiaire d'un étage de normalisation (6) à un second étage de quantification (7) servant à réaliser la quantification scalaire d'un coefficient d'étendue et un troisième étage de quantification (8) servant à réaliser la quantification scalaire de coefficients de structure,

– que le premier étage de quantification (4) et le second étage de quantification (7) sont reliés directement et le troisième étage de quantification (8) est relié par l'intermédiaire d'un dispositif (9) de quantification vectorielle à un codeur (10),

– que la sortie du second étage de quantification (7) et la sortie du dispositif de quantification vectorielle (9) sont reliées respectivement à une entrée d'un étage de reconstitution (11) présent sur le côté émission, dont la sortie est reliée à une seconde entrée du circuit soustracteur (5),

– que la sortie du codeur (10) est reliée par l'intermédiaire d'un canal de transmission (12) à un décodeur (13) situé sur le côté réception, dont une première sortie pour des coefficients de valeur moyenne est reliée à une première entrée d'un étage de transformation (15) situé côté réception, qu'une seconde sortie pour les coefficients d'étendue est reliée à une première entrée d'un étage de reconstitution (14) situé sur le côté réception et dont une troisième sortie pour des coefficients d'erreur est reliée à une seconde entrée de l'étage de reconstitution (14), une sortie de l'étage de reconstitution (14) étant reliée à une seconde entrée de l'étage de transformation (15) situé sur le côté réception, et

– qu'une sortie de l'étage de transformation (15) est reliée par l'intermédiaire d'un étage de recombinaison (16) à une borne de sortie (17), qui délivre un signal de sortie vidéo récupéré (VIDEO OUT).

EP 0 227 956 B1

# FIG 1

# FIG 2

# FIG 5

# FIG 3

$$w = \max_{\substack{i=2\,(1)\,k}} Y_i - \min_{\substack{i=2\,(1)\,k}} Y_i \qquad \sigma = \sqrt{\frac{1}{k}\sum_i \left(x_i - \frac{1}{k}\sum_i x_i\right)^2}$$

# FIG 4

## ORDNUNG DER MHT-MATRIX ⋙ 16